# EUROPEAN PATENT SPECIFICATION

(11) **EP 3 225 350 B1**
(45) Date of publication and mention of the grant of the patent: **30.12.2020**
(21) Application number: 15864105.0
(22) Date of filing: 30.06.2015
(51) Int. Cl.: B23K 35/30, C22C 38/02, C22C 38/42, C22C 38/44, C22C 38/50, C22C 38/54, C22C 38/58, B23K 35/40, B23K 35/02

(54) **SUPER HIGH STRENGTH GAS PROTECTION WELDING WIRE AND MANUFACTURING METHOD THEREFOR AND METHOD TO PRODUCE A WELD METAL**
GASSCHUTZSCHWEISSDRAHT MIT SUPERHOHER FESTIGKEIT UND HERSTELLUNGSVERFAHREN DAFÜR UND VERFAHREN ZUR HERSTELLUNG EINES SCHWEISSMETALLS
FIL DE SOUDAGE SOUS PROTECTION GAZEUSE À TRÈS HAUTE RÉSISTANCE ET SON PROCÉDÉ DE FABRICATION ET PROCÉDÉ POUR PRODUIRE UN MÉTAL SOUDÉ

(30) Priority: 27.11.2014 CN 201410705126
(43) Date of publication of application: 04.10.2017
(73) Proprietor: Baoshan Iron & Steel Co., Ltd., Shanghai 201900 (CN)
(72) Inventor: QU, Zhaoxia, c/o BAOSHAN IRON & STEEL CO., LTD., Shanghai 201900 (CN); XU, Lei, c/o BAOSHAN IRON & STEEL CO., LTD., Shanghai 201900 (CN); XIA, Liqian, c/o BAOSHAN IRON & STEEL CO., LTD., Shanghai 201900 (CN)
(74) Representative: Kuhnen & Wacker Patent- und Rechtsanwaltsbüro PartG mbB
(86) International application number: PCT/CN2015/082734
(87) International publication number: WO 2016/082545

(56) References cited:
- EP-A1- 1 194 603
- EP-A1- 3 225 349
- CN-A- 101 116 930
- CN-A- 101 234 457
- CN-A- 101 992 365
- CN-A- 102 294 554
- CN-A- 104 607 819
- JP-A- 2001 129 683
- JP-A- 2002 079 395
- JP-A- 2002 103 082
- JP-A- 2010 158 716
- US-A1- 2005 155 960

## Description

### Technical Field

The present invention relates to a superhigh strength gas shielded welding wire, a method to produce a weld metal obtained by welding with the same and a method for manufacturing the same.

### Background Art

With the development of high parameter, large scale and light weight requirements on modern mechanized equipment, using a steel with a strength grade of not less than 80 kg grade also becomes the first choice in many manufacturing industries in China.

Examples are cranes and concrete pump trucks in the field of engineering machinery manufactures, and also coal machine hydraulic supports in the field of mining machinery manufactures, or water and electricity pressure steel pipes in the field of hydropower industry industries. Moreover, there is a large demand of steels having a higher strength grade in all manufacture fields related to harbour machinery, ocean structures, passenger and cargo vehicles, special vehicles etc. In addition, since argon gas-enriched shielded welding is an efficient, low-cost and reliable atuomatic or semiatuomatic welding method, such a gas shielded welding method can be widely used in all of the above-mentioned manufacture fields.

Welding materials used for steels having a strength grade of 80 kg or greater generally all contain a certain content of main alloying elements, but no microalloy elements, such that the carbon equivalent of a weld metal formed by such a welding material will be higher; accordingly, the crack resistance of the weld metal will be poorer, and the costs will also be relatively higher. In order to provide the convenience of steel material processing for downstream end users, such as processing steps of material blanking, cutting, welding manufacture, bend forming etc., the strength of a steel having a high strength in the prior art can be improved by low alloying or microalloying. However, with the improvement of the tensile strength, the low temperature impact toughness of a superhigh strength welding material will be greatly decreased, and in order to enable that the superhigh strength welding material also has good strength and toughness properties, a content of not less than 2% of Ni will be generally added, which thus will results in a significant increase of costs of the welding material.

CN 101 905 390 A relates to a gas-protection welding wire with a low alloy and a high strength, the contents of chemical components of the welding wire by mass in percentage being: C: 006-0.12%, Si: 0.30-0.60%, Mn: 1.40-2.00%, P ≤ 0.025%, S ≤ 0.015%, Cr: 0.30-0.70%, Ni: 1.0-1.6%, W: 0.28-0.5%, Cu: 0.25-0.50%, Re: 0.05-0.15%, and the balance being Fe and inevitable impurities. Expensive W and microalloy element Re are added into the shielded welding wire involved in CN 101905390 A.

CN 101 234 457 A discloses a gas shielded welding wire with a high strength and high toughness. The chemical composition (in percentage by mass, wt.%) of the welding wire is: C: 0.04-0.10, Si: 0.30-0.80, Mn: 1.30-2.0, Ni: 0.40-0.89, Cr: 0.20-0.50, Mo: 0.20-0.60, Cu: 0.56-0.80, Ti: 0.05-0.20, B: 0.002-0.010, P ≤ 0.020, S ≤ 0.015, ALS ≤ 0.03, and the balance being Fe and inevitable impurities. A large amount of element Cu is added into the gas shielded welding wires disclosed in CN 101 234 457 A.

CN 101 439 446 A relates to a high-strength steel high-ductility gas shielded welding wire, with the chemical composition (in percentage by mass, wt.%) comprising: C: 0.05-0.13, Mn: 1.4-1.9, Si: 0.4-0.8, Cr: 0.4-0.8, Ni: 1.5-1.8, Mo: 0.3-0.8, Ti: 0.06-0.25, Cu: 0-0.60, S ≤ 0.025, P ≤ 0.025, and the balance being Fe and inevitable impurity elements. The microalloying action of Ti alone is used in CN 101439446 A.

JP 2002 103 082 A provides a wire for carbonic acid gas shielded arc welding having a composition including a plated layer, by mass, 0.005 to 0.09% C, 0.65 to 1.2% Si, 1.5 to 2.2% Mn, 0.15 to 0.30% Ti, 0.0005 to 0.0025% B, <=0.5% Cu, 0.0001 to 0.0030% K and 0.005 to 0.025% S, and the balance substantially Fe, also CE(1) is controlled to >=0.45%, and KEQ to 0.02 to 0.10; wherein, KEQ=(50xK +0.5×S)/(Ti+Si+Al), and CE(l)=C+Mn/6+Si/24.

The gas shield welding wire of CN 102 294 554 A comprises, by mass, C 0.05-0.12%, Si 0.50-1.0%, Mn 1.5-2.0%, S<0.015%, P< 0.020%, Ni 1.1-1.6%, Cr 0.12-0.38%, Mo 0.2-0.48%, Ti 0.08-0.2%, the balance is Fe and inevitable impurity elements.

JP 2002 079395 A provides a welding wire composition for carbon dioxide gas shielded arc welding including a plated layer composed of, by mass, 0.005 to 0.09% C, 0.65 to 1.2% Si, 1.5 to 2.2% Mn, 0.15 to 0.30% Ti, 0.05 to 0.30% Cr, 0.12 to 0.22% Mo, 0.0005 to 0.0025% B, <=0.5% Cu and <=2% Ni, and the balance substantially Fe, and also, CEQ is controlled to >=0.40%, and MEQ to 0.10 to 0.20.

JP 2001 129683 A also provides a welding wire composition for carbon dioxide gas shielded arc welding comprising, by mass %, 0.15% or less C, 0.30-2.0% Si, 0.50-2.5% Mn, 0.030% or less S, 0.0015% or less Ca, 0.11-0.15 mass% (Ti+Al) and the balance Fe.

It can be seen from the technical solutions disclosed in the above-mentioned patent documents that the high strength of a high strength welding material is mainly derived from a certain amount of hardenability alloying elements (such as, elements C, Cr, Mo, W, Ni, Cu and the like), thus improving the strength of the weld metal.

### Summary of the Invention

An object of the present invention lies in providing a superhigh strength gas shielded welding wire having a low alloy content and a low carbon equivalent, and a weld metal formed by welding with the welding wire has all of a higher strength, a greater low-temperature toughness and a better plasticity, with a good compatibility between the three properties. Moreover, the weld metal formed by welding using the welding wire further has a good crack resistance and a good welding property.

In order to achieve the above-mentioned object, the present invention provides the superhigh strength gas shielded welding wire, characterized by the features of appended claim 1.

The inevitable impurities in this technical solution further comprise elements Al, O, N and H in addition to elements P and S. As inevitable impurity elements, the lower the content of these impurity elements, the better. In the superhigh strength gas shielded welding wire, both phosphorus and sulphur are adverse to the plasticity and toughness properties of the weld metal, and therefore their contents needs to be stringently controlled, wherein in the technical solution of the present invention, the content of phosphorus can be controlled at ≤ 0.015 wt.%, and the content of sulphur can be controlled at ≤ 0.010 wt.%. In addition, in order to reduce the production of inclusions, improve the plasticity and toughness of the weld metal, and improve the cleanliness of the weld metal, it can be controlled to be Al ≤ 0.02wt.%. Moreover, in order to improve the toughness of the weld metal, it can be controlled to be 0 ≤ 0.005 wt.%, N ≤ 0.006 wt.% and H ≤ 0.0002 wt.%.

The design principle of various chemical elements in the superhigh strength gas shielded welding wire of the present invention is as follows:
C: Carbon can effectively improve the strength of the weld metal. However, an excessively high content of element carbon can affect the plasticity, toughness and cold crack sensitivity of the weld metal, and therefore based on the technical solution of the present invention, the content of carbon in the welding wire should be controlled between 0.06-0.12 wt.%.

Preferably, the content of carbon in the welding wire can be controlled at 0.06-0.10 wt.%.

Si: Silicon is solid-dissolved in ferrite and austenite and can improve the strength of the weld metal. Moreover, adding a certain content of silicon can further increase the weld metal, such that that the welding wire has good welding processing properties in the process of welding. However, an excessively high content of silicon can result in a sharp decrease in toughness of the weld metal, and for this reason, the content of silicon in the welding wire of the present invention in percentage by mass is designed to be 0.55-0.80%.

Preferably, the content of silicon in the welding wire in percentage by mass can be further set as 0.55-0.75%.

Mn: Manganese is one of the beneficial elements which increase the toughness of the weld metal. The increase of the content of manganese is not only beneficial for the prevention of hot crack from occurring in the weld metal, but also beneficial for the deoxygenation of the weld metal. Nevertheless, if the manganese content is excessively high, segregation and cracking in a welding wire steel slab tend to occur, and an excessively high carbon equivalent in the weld metal, and a reduction of the toughness of the weld metal will also occur. Thus, the content of element manganese in the gas shielded welding wire of the present invention should be controlled at 1.60-1.95 wt.%.

More preferably, the content of element manganese is controlled at 1.70-1.90 wt.%.

Cu: When the content of copper is less than 0.5 wt.%, its effect is mainly solid solution strengthening, and the precipitation strengthening effect is not obvious; when the content of copper is greater than 0.5 wt.%, the precipitation strengthening plays the leading role, and the solid solution strengthening effect of Cu is used in this technical solution; however, the increase of copper content can result in an increase of the carbon equivalent, thereby also leading to a corresponding increase of hot crack sensitivity. By the combination of various factors, the content of copper in the gas shielded welding wire of the present invention in percentage by mass is set as 0 ≤ Cu ≤ 0.20%.

Preferably, the content of copper in percentage by mass can be 0 < Cu ≤ 0.15%.

Cr: Chromium can improve the hardenability of the weld metal, thereby improving the strength. However, an excessively high content of chromium can reduce the toughness of the weld metal, and can further increase the cold crack sensitivity of the weld metal. Only a certain content of element chromium can refine ferrite grains, thus increasing the strength and toughness of the secondary structure of the weld metal. In view of this, the chromium content in the technical solution of the present invention can be controlled at 0.10-0.35 wt.%.

Preferably, the chromium content in the above-mentioned technical solution can be further controlled at 0.10-0.30 wt.%.

Mo: Molybdenum, due to the presence in a solid solution phase and a carbide phase, has a solid solution strengthening effect and a precipitation strengthening effect; moreover, molybdenum further has a grain refining effect, thus having an effect of improving both the strength and toughness of the weld metal. Molybdenum is an element reducing the temper brittleness, and can improve the temper stability of a multi-pass weld metal; however, an excessively high content of molybdenum can cause the weld structure to produce more quenched structure, increasing the cold crack sensitivity of the weld metal. Moreover, the addition cost of metal molybdenum is also relatively high. On this basis, the content of molybdenum in the superhigh gas shielded welding wire of the present invention should be controlled at 0.10-0.50 wt.%.

Preferably, the content of molybdenum can be further controlled to be 0.20-0.50 wt.%.

Ni: Nickel can improve the toughness of the weld metal, particularly the low temperature impact toughness of the weld metal, and reduces the brittle transition temperature. Within a certain addition range, with the increase of the content of nickel, the strength of the weld metal can be improved; however, once the content of nickel exceeds the addition range, the strength of the weld metal will not increase with the increase of the content. Moreover, element nickel is an expensive alloy metal element, and it is necessary to consider the effect on the production costs when performing the addition. Therefore, the nickel content in the technical solution of the present invention is controlled at 1.00-1.60 wt.%.

As a more preferred setting range, the nickel content can be controlled at 1.20-1.60 wt.%.

Ti and B: Titanium oxides and nitrides formed from titanium with oxygen and nitrogen, as nucleation particles of an intracrystalline secondary weld structure, strengthen the grain interior. Boron is segregated at the austenite grain boundary, inhibiting the nucleation and growth of proeutectoid ferrite, and strengthening the grain boundary. However, when the content of boron is excessively high, boron brittleness will be caused. The composite effect of combined addition of titanium and boron is that a slightly higher content of titanium can be preferentially combined with oxygen and nitrogen, such that boron can be protected from oxidization. However, the content of titanium should not be excessively high either, and the reason lies in: The resulting oxides and nitrides having an excessively high Ti content have non-uniform sizes, wherein oxides and nitrides having a larger size will be present in a form of inclusions in the weld metal, such that the plasticity of the weld metal will be significantly decreased. Thus, in the superhigh strength gas shielded welding wire of the present invention, the content of titanium needs to be controlled at 0.01-0.20 wt.%, and the content of boron needs to be controlled at 0.0005-0.0060 wt.%.

Preferably, the content of titanium can be controlled at 0.03-0.15 wt.%.

Preferably, the content of boron can be controlled at 0.0015-0.0050 wt.%.

As compared to the prior art, the superhigh strength gas shielded welding wire of the present invention contains no microalloy elements such as W and Re. In addition, the addition amount of alloying elements in the welding wire of the present invention is lower, and the carbon equivalent is lower, such that the production cost of the welding wire is relatively lower; therefore, the welding wire has a better economic benefit.

Moreover, as compared to the prior art, element Cu in the superhigh strength gas shielded welding wire of the present invention mainly plays a role of solid solution strengthening, while element Cu in the prior art plays a role of precipitation strengthening in the technical solution disclosed.

In addition, as compared to the prior art, on the basis of the addition of element Ti to the superhigh strength gas shielded welding wire of the present invention, element B is further added, so as to achieve compound micro-alloying of Ti and B. By using the effect of compound micro-alloying of Ti and B, micro-alloying element B can refine and strengthen the grain boundary, avoiding the formation of grain boundary ferrite at the grain boundary; however, boron nitride precipitates may be possibly formed. On the basis of the addition of B, micro-alloying element Ti is added at the same time, wherein on one hand, B can be prevented from being oxidized so as to ensure that the B works; and on the other hand, Ti can be used as a deoxidant. In addition, oxides, carbides, nitrides and carbonitrides of Ti can effectively inhibit the growth of grains, and refine the deposited metal structure.

Further, it is further necessary for elements Cr and Mo in the superhigh strength gas shielded welding wire of the present invention to satisfy: 0.30% ≤ Cr + Mo ≤ 0.60%.

The minimum value of the sum of the above-mentioned two elements is limited as 0.3%, mainly for ensuring that the weld metal formed from the welding wire has a certain strength; weld metal is a casting-state structure formed in the process of special heating-cooling, and the mechanical properties are mainly derived from the fact that the weld metal has a certain alloy content; since the feature of the present invention is compound micro-alloying of Ti and B without micro-alloying using V, the upper limit value of the sum of the two elements needs to be defined as 0.6%, this is for ensuring that the weld metal formed from the welding wire has a lower carbon equivalent so as to ensure a good weldability. In this technical solution, the formula of carbon equivalent is C_{eq} = C + Mn/6 + (Ni + Cu)/15 + (Cr + Mo)/5.

Further, elements Cr and Cu in the superhigh strength gas shielded welding wire of the present invention further satisfy: 0.15% ≤ Cr + Cu ≤ 0.40%.

Redox reaction can occur to the welding wire in the welding process, and with regard to the gas shielded welding wire, the burning loss of elements silicon and manganese is maximum, but the burning loss of elements chromium and copper is not great; due to the effects of the two in the composition design, there must be a minimum limit, and for reducing the cold crack sensitivity coefficient of the weld metal to the greatest extent, the maximum value is further defined in this technical solution. In this technical solution, the welding cold crack sensitivity index formula is P_{cm} = C + Si/30 + (Mn + Cu + Cr)/20 + Ni/60 + Mo/15 + 5B.

Further, in order to obtain a weld metal with the welding wire of the present invention, the interpass temperature is controlled between 100-165°C, the weld heat input is controlled at 8-13 kJ/cm, and the microstructure of a deposited metal obtained from the superhigh strength gas shielded welding wire of the present invention is martensite + bainite.

More further, the content by volume of martensite in the weld surface structure of the above-mentioned deposited metal is 20-35%.

More further, the content by volume of martensite in the weld interpass heat affected zone structure of the above-mentioned deposited metal is 5-20%.

Alternatively, in order to obtain a weld metal with the welding wire of the present invention, the interpass temperature is controlled between 100-165°C, the weld heat input is controlled at 8-13 kJ/cm, and the deposited metal obtained from the superhigh strength gas shielded welding wire of the present invention has a precipitate, the precipitate being at least one of carbides, nitrides and carbonnitrides of Ti and B.

Correspondingly, the present invention further provides a method for manufacturing the welding wire of the present invention, comprising steps as follows: smelting, refining, casting, hot rolling, slow cooling, wire-drawing into steel wire rods, acid pickling, coarse drawing, a heat treatment, fine drawing and copper plating; wherein the heat treatment temperature in the heat treatment step is 680-720°C.

In the process for manufacturing the superhigh strength welding wire, the welding wire becomes thinner due to being continuously drawn, there is a greater processing-hardening effect, and the stability of the drawing process will be affected; therefore, it is necessary to perform a heat treatment, for the purpose of eliminating a strengthening effect resulting from the processing process, such that the drawing process is performed successfully. The annealing temperature is chosen below line A_{c1}, for the superhigh strength gas shielded welding wire of the present invention, the deformation strengthening and the second phase particle strengthening are taken as the main in the drawing process; therefore, when choosing a heat treatment process, it is necessary to consider to eliminate the processing-hardening effect needs, and for this purpose, the heat treatment temperature is set between the range of 680-720°C. On this basis, a slow cooling mode shall be adopted as far as possible, so as to avoid the production of a fine-grain structure and a quenched structure.

Micro-alloying of Ti and B is used in the superhigh strength gas shielded welding wire of the present invention, such that the weld metal formed from the welding wire has a higher strength and a good plasticity.

Alloying effect of elements Cr, Mo, Mn, Ni etc., is used in the superhigh strength gas shielded welding wire of the present invention, and the strength and the toughness of the resulting weld metal are improved.

Moreover, element Si is added into the superhigh strength gas shielded welding wire of the present invention, such that the welding wire has a good welding property.

In addition, the weld metal formed by welding the superhigh strength gas shielded welding wire of the present invention further has a good crack resistance and a better economic benefit.

After gas shielded welding is performed using the welding wire of the present invention, the formed weld metal has a yield strength Rₑ₁ of 730-810 MPa, a tensile strength Rₘ of 780-920 MPa and an elongation A of 16-20%, with the average values of Charpy V impact energy at -20°C and -40°C respectively reaching not less than 100 J and 90 J. For this reason, the welding wire can be extensively used in industries where a superhigh strength steel having a grade of 80 kg or higher needs to be used for gas shielded welding, for example, in the industrial fields of engineering machinery, hydropower engineering, oceanographic engineering, automobile making etc.

The weld metal formed by gas shielded welding of the welding wire produced by the method for manufacturing the welding wire of the present invention has comprehensive mechanical properties of a higher strength, a better toughness, a better plasticity, etc.

### Description of the Drawings

Figure 1 is a metallographic pattern of a weld surface structure of a deposited metal obtained from a welding wire in Example 1.
Figure 2 is a metallographic pattern of a weld surface structure of a deposited metal obtained from a welding wire in Example 2.
Figure 3 is a metallographic pattern of a weld interpass heat affected zone structure of a deposited metal obtained from a welding wire in Example 3.
Figure 4 is a metallographic pattern of a weld interpass heat affected zone structure of a deposited metal obtained from a welding wire in Example 4.
Figure 5 is a metallograph of a weld surface structure of a typical deposited metal.
Figure 6(a) is a 1000-fold scanning electron micrograph of a weld surface of a typical deposited metal.
Figure 6(b) is a 3000-fold scanning electron micrograph of the weld surface of the typical deposited metal.
Figure 7(a) is a 6000-fold transmission electron microscope photograph of the weld surface of the typical deposited metal.
Figure 7(b) is a 8000-fold transmission electron microscope photograph of a weld surface of a typical deposited metal.
Figure 7(c) is a 15000-fold transmission electron microscope photograph of the weld surface of the typical deposited metal.
Figure 7(d) is a 50000-fold transmission electron microscope photograph of the weld surface of the typical deposited metal.
Figure 8(a) is a 1000-fold scanning electron micrograph of a weld surface of a typical deposited metal.
Figure 8(b) is a scanning electron micrograph of the weld surface of the typical deposited metal and an energy spectrum test point position.
Figure 8(c) is the result of an energy spectrum test at test point 1 (Spectrum 1) of the weld surface of the typical deposited metal.

### Particular Embodiments

The superhigh strength gas shielded welding wire of the present invention and the method for manufacturing are further explained and described below in conjunction of the accompanying drawings of the description and particular embodiments; however, the explanation and description are not intended to inappropriately limit the technical solution of the invention.

The proportions, in percentage by mass, of various chemical elements in welding wires in Examples 1-5 are listed in Table 1.

**Table 1 (wt.%, the balance being Fe and other inevitable impurities other than elements P, S, Al, O, N and H)**

| Number | C | Si | Mn | Cu | Cr | Mo | Ni | Ti | B | Cr + Mo | Cr + Cu |
|---|---|---|---|---|---|---|---|---|---|---|---|
| 1 | 0.078 | 0.75 | 1.90 | 0.10 | 0.28 | 0.10 | 1.29 | 0.16 | 0.0038 | 0.38 | 0.38 |
| 2 | 0.105 | 0.65 | 1.72 | 0.20 | 0.16 | 0.38 | 1.38 | 0.11 | 0.0030 | 0.54 | 0.36 |
| 3 | 0.09 | 0.70 | 1.85 | 0.08 | 0.22 | 0.35 | 1.12 | 0.15 | 0.0016 | 0.57 | 0.30 |
| 4 | 0.06 | 0.80 | 1.95 | 0.05 | 0.35 | 0.21 | 1.00 | 0.20 | 0.0060 | 0.56 | 0.40 |
| 5 | 0.12 | 0.55 | 1.60 | 0.13 | 0.10 | 0.50 | 1.60 | 0.08 | 0.0005 | 0.60 | 0.23 |

The welding wires from Examples 1-5 of the present case are manufactured using the following steps: smelting using an induction furnace, refining, continuously casting into a big square slab, hot rolling, slow cooling, wire-drawing into steel wire rods, acid pickling, coarse drawing, performing a heat treatment when coarse drawing to Φ2.2 mm-Φ3.5 mm, fine drawing and copper plating to finally obtain a welding wire of Φ1.2 mm. These steps are basically common steps in the welding wire manufacturing field, and therefore no more detailed description is provided with regard to these manufacturing steps in this technical solution. It merely lies in that the heat treatment step is different from the prior art; in this technical solution, the heat treatment temperature is 680-720°C, the cooling process is slow cooling, and the cooling time is 5 h.

The heat treatment temperatures in the method for manufacturing the welding wires in Examples 1-5 are listed in Table 2.

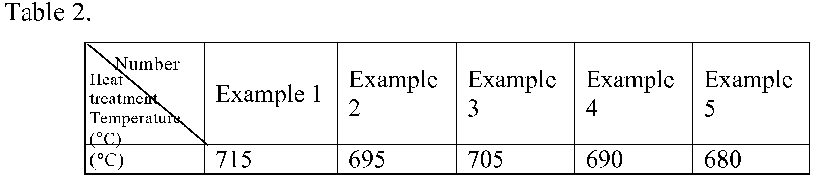

A low-alloy high-strength steel plate having a plate thickness of 20 mm is used, the groove type is a 45° single V type, the gap is 12 mm, welding is performed using the welding wires in Examples 1-5 without preheating, a shielding gas of 80% Ar + 20% CO₂ is used, the interpass temperature is controlled between 100-165°C, the weld heat input is controlled at 8-13 kJ/cm, and multi-pass welding is performed on the parent metal to ensure weld full penetration. After welding, the weld metal is subjected to an all element spectral analysis, a longitudinal tensile test, and a Charpy V-notch impact test of a full sample size, with various parameters being as shown in table 3 in detail.

Various mechanical property parameters of the weld metals obtained by gas shielded welding of the welding wires in Examples 1-5 of the present case are listed in Table 3.

**Table 3.**

| Number | Yield strength Rₑₗ (MPa) | Tensile strength Rₘ (MPa) | Elongation A(%) | -20°C Charpy V impact energy (KV2, J) | | | | -40°C Charpy V impact energy (KV2, J) | | | |
|---|---|---|---|---|---|---|---|---|---|---|---|
| | | | | 1 | 2 | 3 | Average value | 1 | 2 | 3 | Average value |
| 1 | 790 | 905 | 18 | 123 | 138 | 118 | 126 | 105 | 81 | 84 | 90 |
| 2 | 850 | 920 | 17 | 108 | 93 | 105 | 102 | 90 | 103 | 84 | 92 |
| 3 | 805 | 850 | 20 | 134 | 117 | 147 | 132 | 114 | 129 | 111 | 118 |
| 4 | 805 | 845 | 19 | 111 | 150 | 109 | 123 | 105 | 84 | 111 | 100 |
| 5 | 815 | 870 | 19 | 90 | 102 | 91 | 94 | 87 | 81 | 76 | 81 |

It can be seen from table 3 that of the weld metals obtained by gas shielded welding using the welding wires in the above-mentioned Examples 1-5, the yield strengths (Rₑ₁) are all ≥ 790 MPa, the tensile strengths (Rₘ) are all ≥ 845 MPa, the elongations A are all ≥ 17%, the average values of -20°C Charpy V impact energy are all ≥ 94 J, and the average values of -40°C Charpy V impact energy are all ≥ 81 J, which indicates: the weld wire of the present invention has a higher strength, a greater impact toughness, a better plasticity, and a better crack resistance, with the various mechanical properties being all capable of matching with superhigh strength steels having a grade of 80 kg or higher; and is a gas shielded welding material in manufacturing fields of engineering machinery, hydropower engineering, oceanographic engineering, commercial vehicles etc.

It can be seen by analysis that after the addition of titanium into the weld wire, carbonitride compounds of titanium are precipitated at a higher temperature, which stops austenite grains from growing, playing a role of grain refining. The added boron will be segregated at the austenite grain boundary, which hinders the nucleation of ferrite, is thus beneficial for the formation of bainite, and improves the strength of the weld metal.

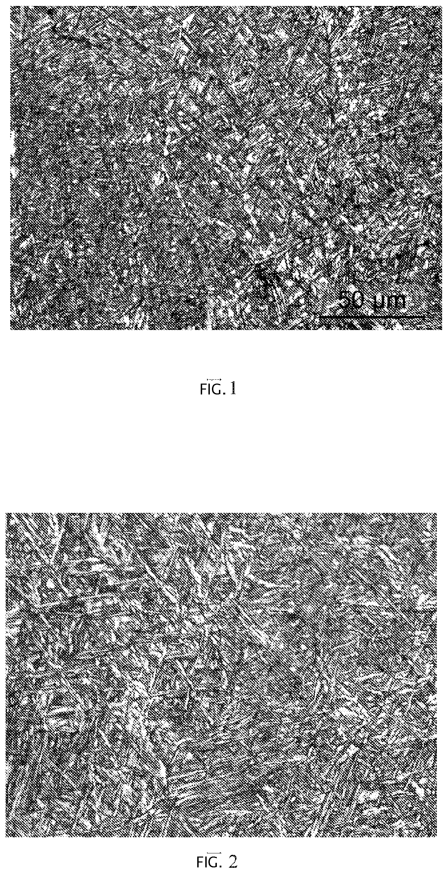

Figure 1 shows the microstructure of a weld surface structure of the deposited metal obtained by gas shielded welding using the welding wire in Example 1. As shown in figure 1, the microstructure of the weld surface structure of the deposited metal is martensite + bainite, wherein the content by volume of martensite is 35%, and the content by volume of bainite is 65%.

Figure 2 shows the microstructure of the weld surface structure of the deposited metal obtained by gas shielded welding using the welding wire in Example 2. As shown in figure 2, the microstructure of the deposited metal is martensite + bainite, wherein the content by volume of martensite is 20%, and the content by volume of bainite is 80%.

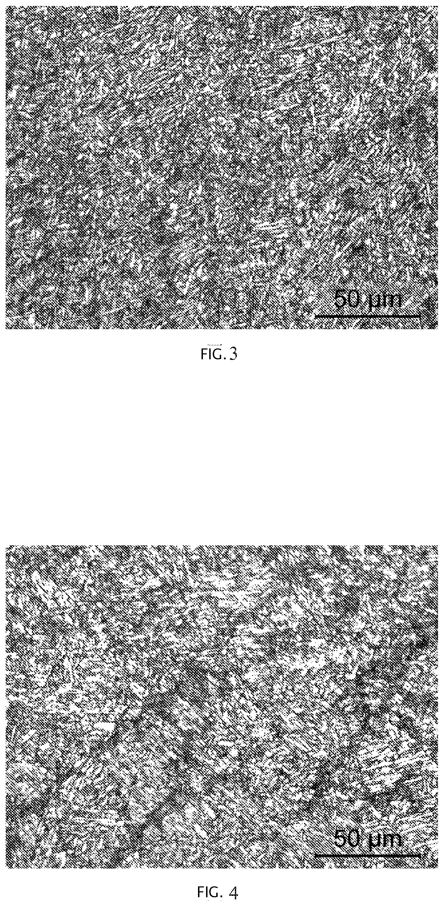

Figure 3 shows the weld interpass heat affected zone structure of the deposited metal obtained by gas shielded welding using the welding wire in Example 3. As shown in figure 3, the microstructure of the weld interpass heat affected zone structure of the deposited metal is martensite + bainite, wherein the content by volume of martensite is 15-20%, and the content by volume of bainite is 80-85%.

Figure 4 shows the weld interpass heat affected zone structure of the deposited metal obtained by gas shielded welding using the welding wire in Example 4. As shown in figure 4, the microstructure of the weld interpass heat affected zone structure of the deposited metal is martensite + bainite, wherein the content by volume of martensite is less than 10%, and the content by volume of bainite is greater than 90%.

In addition, it can be seen from figures 1-4 that there are carbides, nitrides and carbonitrides of Ti and B precipitated in all the weld surface structures and the weld interpass heat affected zones of the deposited metals.

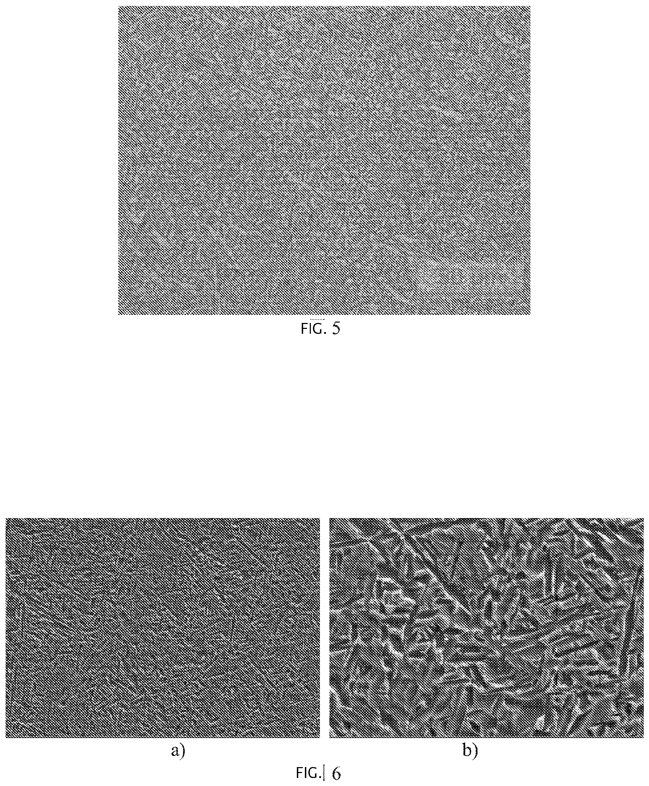

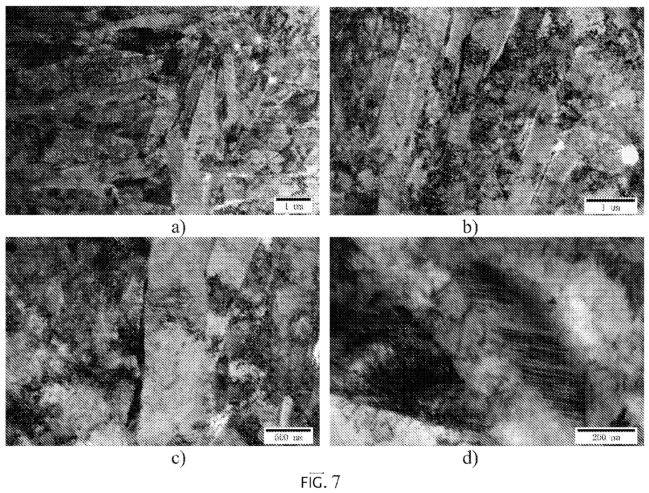

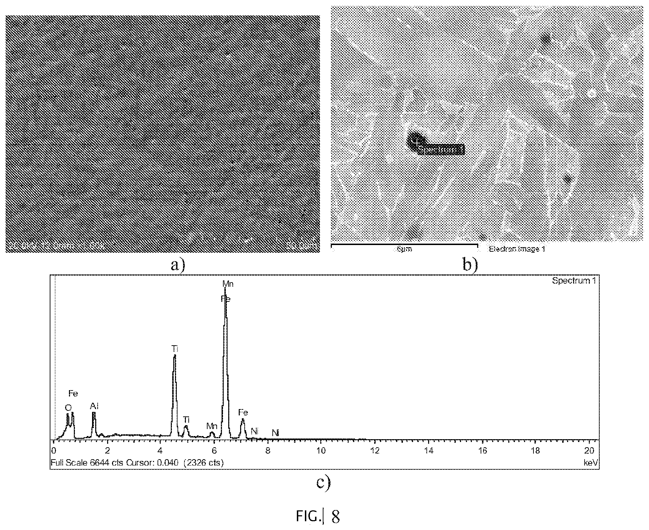

Figures 5 and 6 provide a metallograph and an SEM photograph of a weld surface of a typical surface weld, and it can be seen from the figures that the weld structure is composed of bainite + lath martensite + a small amount of quasi-polygonal ferrite. Figure 7 is a TEM photograph of a typical surface weld, the structure being lower bainite + quasi-polygonal ferrite. Figure 8(a) is an SEM photograph of a weld metal, and it can be observed that there are dispersively distributed fine precipitates. Figures 8(b) and 8(c) provide the result of analysis of the precipitate composition using EDS, and it can be seen therefrom that titanium is contained.

It is to be noted that those listed above are only the specific particular embodiments of the present invention, and obviously the present invention is not limited to the above embodiments and has many similar changes with the embodiments. All variations which can be directly derived from or associated with the disclosure of the invention as defined in the appended claims by those skilled in the art should be within the scope of protection of the present invention. The scope of the invention is as set out in the appended claims.

## Claims

1. A superhigh strength gas shielded welding wire, **characterized in that** the contents of chemical elements of the superhigh strength gas shielded welding wire in percentage by mass are: C 0.06-0.12%, Si 0.55-0.80%, Mn 1.60-1.95%, 0 < Cu < 0.20%, Cr 0.10-0.35%, Mo 0.10-0.50%, Ni 1.00-1.60%, Ti 0.01-0.20%, B 0.0005-0.0060%, and the balance being Fe and other inevitable impurities; and in further satisfying: 0.30% Cr + Mo ≤ 0.60% and 0.15% ≤ Cr + Cu ≤ 0.40%.

2. A method to produce a weld metal obtained by welding with the superhigh strength gas shielded welding wire of claim 1, **characterized in that** the interpass temperature is controlled between 100-165°C, the weld heat input is controlled at 8-13 kJ/cm, and the microstructure of a deposited metal obtained from the superhigh strength gas shielded welding wire is martensite + bainite.

3. The method to produce a weld metal of claim 2, **characterized in that** the content by volume of martensite in the weld surface structure of the obtained deposited metal is 20-35%.

4. The method to produce a weld metal of claim 2, **characterized in that** the content by volume of martensite in the weld interpass heat affected zone structure of the obtained deposited metal is 5-20%.

5. The method to produce a weld metal of claim 2, **characterized in that** the deposited metal obtained from the superhigh strength gas shielded welding wire has a precipitate, the precipitate being at least one of carbides, nitrides and carbonnitrides of Ti and B.

6. A method for manufacturing the superhigh strength gas shielded welding wire of claims 1, **characterized by** comprising the steps: smelting, refining, casting, hot rolling, slow cooling, wire-drawing into steel wire rods, acid pickling, coarse drawing, a heat treatment, fine drawing and copper plating; wherein the heat treatment temperature in said heat treatment step is 680-720°C.

## Patentansprüche

1. Höchstfester Schutzgasschweißdraht, **dadurch gekennzeichnet, dass** der Gehalt an chemischen Elementen des höchstfesten Schutzgasschweißdrahts einen Massenanteil aufweist von: 0,06 - 0, 12 % C, 0,55 - 0,80 % Si, 1,60 - 1,95 % Mn, 0 < Cu ≤ 0,20 %, 0,10 - 0,35 % Cr, 0,10 - 0,50 % Mo, 1,00 - 1,60 % Ni, 0,01 - 0,20 % Ti, 0,0005 - 0,0060 % B, wobei der Rest durch Fe und andere unvermeidbare Verunreinigungen gebildet wird, und dadurch, dass er ferner folgendes erfüllt: 0,30 % ≤ Cr + Mo ≤ 0,60 % und 0,15 % ≤ Cr + Cu ≤ 0,40 %.

2. Verfahren zum Erzeugen eines Schweißmetalls, das durch Schweißen mit dem höchstfesten Schutzgasschweißdraht nach Anspruch 1 erhalten wird, **dadurch gekennzeichnet, dass** die Zwischenlagentemperatur auf einen Wert zwischen 100 - 165 °C gesteuert wird, die Schweißwärmezufuhr auf einen Wert bei 8 - 13 kJ/cm gesteuert wird, und die Mikrostruktur eines abgeschiedenen Metalls, das durch den höchstfesten Schutzgasschweißdraht erhalten wird, Martensit + Bainit ist.

3. Verfahren zum Erzeugen eines Schweißmetalls nach Anspruch 2, **dadurch gekennzeichnet, dass** der Volumenanteil von Martensit in der Schweißoberflächenstruktur des erhaltenen abgeschiedenen Metalls 20 - 35 % ist.

4. Verfahren zum Erzeugen eines Schweißmetalls nach Anspruch 2, **dadurch gekennzeichnet, dass** der Volumenanteil von Martensit in der von einer Zwischenlagenwärme betroffenen Schweißzonenstruktur des erhaltenen abgeschiedenen Metalls 5 - 20 % ist.

5. Verfahren zum Erzeugen eines Schweißmetalls nach Anspruch 2, **dadurch gekennzeichnet, dass** das von dem höchstfesten Schutzgasschweißdraht erhaltene abgeschiedene Metall ein Fällungsprodukt aufweist, wobei das Fällungsprodukt Carbide, Nitride und/oder Carbonnitride aus Ti und B beinhaltet.

6. Verfahren zum Herstellen des höchstfesten Schutzgasschweißdrahts nach Anspruch 1, **dadurch gekennzeichnet, dass** es folgende Schritte beinhaltet: Verschmelzen, Raffinieren, Gießen, Warmwalzen, langsames Abkühlen, Ziehen des Drahts zu Walzdrahtstäben, Beizen in Säure, Grobziehen, eine Wärmebehandlung, Feinziehen und Kupferplattieren; wobei die Wärmebehandlungstemperatur in dem Wärmebehandlungsschritt 680 - 720 °C ist.

## Revendications

1. Fil de soudage sous gaz protecteur de résistance très élevée, **caractérisé en ce que** les teneurs en éléments chimiques du fil de soudage sous gaz protecteur de résistance très élevée en pourcentage en masse sont : C 0,06-0,12 %, Si 0,55-0,80 %, Mn 1,60-1,95 %, 0 < Cu ≤ 0,20 %, Cr 0,10-0,35 %, Mo 0,10-0,50 %, Ni 1,00-1,60 %, Ti 0,01-0,20 %, B 0,0005-0,0060 %, et le reste étant Fe et d'autres impuretés inévitables ; et satisfaisant de plus : 0,30 % ≤ Cr + Mo ≤ 0,60 % et 0,15 % ≤ Cr + Cu ≤ 0,40 %.

2. Procédé pour la production d'un métal de soudure obtenu par soudage avec le fil de soudage sous gaz protecteur de résistance très élevée selon la revendication 1, **caractérisé en ce que** la température entre les passes est contrôlée entre 100-165°C, l'entrée de chaleur de soudure est contrôlée à 8-13 kJ/cm, et la microstructure d'un métal déposé obtenue à partir du fil de soudage sous gaz protecteur de résistance très élevée est de la martensite + bainite.

3. Procédé de production d'un métal de soudure selon la revendication 2, **caractérisé en ce que** la teneur en volume de martensite dans la structure de surface de soudure du métal déposé obtenu est de 20-35 %.

4. Procédé pour la production d'un métal de soudure selon la revendication 2, **caractérisé en ce que** la teneur en volume de martensite dans la structure de zone affectée par la chaleur entre les passes de soudure du métal déposé obtenu est de 5-20 %.

5. Procédé pour la production d'un métal de soudure selon la revendication 2, **caractérisé en ce que** le métal déposé obtenu à partir du fil de soudage sous gaz protecteur de résistance très élevée présente un précipité, le précipité étant au moins un de carbures, nitrures et carbonitrures de Ti et B.

6. Procédé pour la fabrication du fil de soudage sous gaz protecteur de résistance très élevée selon la revendication 1, **caractérisé en ce qu'**il comprend les étapes de : fonte, raffinage, coulée, laminage à chaud, refroidissement lent, tréfilage en fils machine d'acier, décapage à l'acide, étirage grossier, un traitement thermique, étirage fin et placage de cuivre ; dans lequel la température de traitement thermique dans ladite étape de traitement thermique est de 680-720°C.
